# EUROPÄISCHE PATENTANMELDUNG

(11) **EP 4 651 441 A1**
(43) Veröffentlichungstag der Anmeldung: **19.11.2025**
(21) Anmeldenummer: 25176157.3
(22) Anmeldetag: 13.05.2025
(51) Int. Cl.: H04L 9/40, G06Q 20/12, H04W 12/08, H04W 12/77, H04L 67/146

(54) **ZULASSEN EINES DIENSTES MITTELS EINES MOBILEN TERMINALS**

(30) Priorität: 15.05.2024 DE 102024113673
(71) Anmelder: WeWash GmbH, 80336 München (DE)
(72) Erfinder: Allenberg, Jan, 81829 München (DE); Kirschner, Rafael, 80799 München (DE)
(74) Vertreter: Patentanwaltskanzlei Hinkelmann

(57) **Zusammenfassung**

Die Erfindung betrifft ein System und ein Verfahren zum Zulassen zumindest eines an einem vorgegebenen Ort 1 zu erbringenden Dienstes über ein zur Kommunikation mittels Internet-Protokollen eingerichtetes Kommunikationsnetz 2 mittels eines mobilen Terminals 3, eines Servers 4 und einer am vorgegebenen Ort 1 angeordneten Kontrolleinrichtung 5, wobei die Kontrolleinrichtung 5 mit dem Server 4 verbunden und von dem Server 4 zum Zulassen des Dienstes steuerbar ist, wobei der Server 4 mit dem mobilen Terminal 3 über das Kommunikationsnetz 2 verbunden ist, bei welchem Verfahren der Server 4 eine Validierung jeder von dem mobilen Terminal 3 erhaltenen Anforderung des Dienstes durchführt und bei positivem Ergebnis der Validierung den Dienst zulässt. Der Server 4 empfängt die Anforderung als Adresse 8 für eine von dem Server 4 verwaltete erste Internet-Seite 9 und macht die erste Internet-Seite 9 dem mobilen Terminal 3 zugänglich, erzeugt ein erstes Cookie 10 mit ersten Daten umfassend erste Identifizierungsdaten 11 sowie einer Geltung für einen ersten vorbestimmten Zeitraum und sendet es an das mobile Terminal 3, und ruft zugleich von dem mobilen Terminal 3 Information 12 einschließlich Zahlungsinformation für die Validierung der Anforderung ab. Das mobile Terminal 3 stellt die erste Internet-Seite 9 dar, trägt die abgerufene Information 12 in die erste Internet-Seite 9 ein und sendet diese mit den Daten des ersten Cookies 10 an den Server 4, dieser validiert die von dem mobilen Terminal 3 abgerufene Information 12 und entweder, falls die Validierung ein negatives Ergebnis hat, lässt der Server 4 den Dienst nicht zu und sendet eine entsprechende zweite Internet-Seite 13 zur Darstellung auf dem mobilen Terminal 3 mit einer negativen Antwort und mit dem ersten Cookie 10 an das mobile Terminal 3, oder, falls die Validierung ein positives Ergebnis hat, lässt der Server 4 den Dienst zu und sendet eine entsprechende dritte Internet-Seite 14 zur Darstellung auf dem mobilen Terminal 3 mit einer positiven Antwort und mit dem ersten Cookie 10 an das mobile Terminal 3. Die Erfindung betrifft auch ein entsprechendes Computerprogrammprodukt 19 und eine entsprechende Kombination mit zumindest einem computerlesbaren Datenträger 21.

## Beschreibung

Die Erfindung betrifft ein System zum Zulassen zumindest eines an einem vorgegebenen Ort zu erbringenden Dienstes, umfassend ein zur Kommunikation mittels Internet-Protokollen eingerichtetes Kommunikationsnetz, ein mobiles Terminal, einen Server und eine am vorgegebenen Ort angeordnete Kontrolleinrichtung, welche zur Kommunikation über das Kommunikationsnetz mittels Internet-Protokollen eingerichtet sind, wobei die Kontrolleinrichtung mit dem Server verbunden und von dem Server zum Zulassen des Dienstes steuerbar ist, wobei der Server mit dem mobilen Terminal über das Kommunikationsnetz verbindbar ist, bei welchem System der Server eingerichtet ist, um eine Validierung jeder von dem mobilen Terminal erhaltenen Anforderung des Dienstes durchzuführen und bei positivem Ergebnis der Validierung den Dienst zuzulassen.

Die Erfindung betrifft auch ein Verfahren zum Zulassen zumindest eines an einem vorgegebenen Ort zu erbringenden Dienstes über ein zur Kommunikation mittels Internet-Protokollen eingerichtetes Kommunikationsnetz mittels eines mobilen Terminals, eines Servers und einer am vorgegebenen Ort angeordneten Kontrolleinrichtung, wobei die Kontrolleinrichtung mit dem Server verbunden und von dem Server zum Zulassen des Dienstes steuerbar ist, wobei der Server mit dem mobilen Terminal über das Kommunikationsnetz verbunden ist, bei welchem Verfahren der Server eine Validierung jeder von dem mobilen Terminal erhaltenen Anforderung des Dienstes durchführt und bei positivem Ergebnis der Validierung den Dienst zulässt.

Die Erfindung betrifft weiterhin ein Computerprogrammprodukt umfassend ein Servermodul von ersten Befehlen und ein Kontrollmodul von zweiten Befehlen, wobei die ersten Befehle bei Ausführung auf einem entsprechenden Server und die zweiten Befehle bei Ausführung auf einer entsprechenden Kontrolleinrichtung diese veranlassen, untereinander und mit einem mobilen Terminal über ein zur Kommunikation mittels Internet-Protokollen eingerichtetes Kommunikationsnetz zu kommunizieren und ein Verfahren gemäß der Erfindung auszuführen.

Fernerhin betrifft die Erfindung eine Kombination umfassend zumindest einen computerlesbaren Datenträger, auf welcher Kombination das Computerprogrammprodukt gemäß der Erfindung gespeichert ist.

Das Dokument DE 10 2015 217 318 A1 betrifft ein System und ein Kommunikationsmodul zur Steuerung einer Wäschepflegemaschine. Das System und das Kommunikationsmodul haben zum Gegenstand die gemeinschaftliche Nutzung einer Wäschepflegemaschine. Das System umfasst eine Steuereinheit, die eingerichtet ist zu ermitteln, dass eine Nutzerperson die Wäschepflegemaschine in einem ersten Zeitraum nutzen möchte. Dabei sind die Steuereinheit und die Wäschepflegemaschine örtlich voneinander getrennt. Das System umfasst weiter ein Kommunikationsmodul am Ort der Wäschepflegemaschine, das eingerichtet ist, eine elektrisch leitende Verbindung zwischen der Wäschepflegemaschine und einer elektrischen Versorgungsquelle zu trennen bzw. zu bilden. Die Steuereinheit ist weiter eingerichtet, das Kommunikationsmodul über eine WAN-Kommunikationsverbindung zu veranlassen, die elektrisch leitende Verbindung für den ersten Zeitraum zu bilden. Bei diesem System meldet sich die Nutzerperson derart an, dass sie auf einem ihr zugehörigen mobilen Terminal, insbesondere einem Smartphone, ein entsprechendes Programm, auch geläufig als App bezeichnet, installiert und sich über dieses Programm unter Mitteilung von Identitätsinformation und Zahlungsinformation sowie Bezeichnung der zur Nutzung gewünschten Wäschepflegemaschine für deren gebührenpflichtige Nutzung anmeldet. Anforderungen für die Zulassung der Wäschepflegemaschine sendet die Nutzerperson sodann mittels dieser App über ein Kommunikationsnetz, insbesondere das Internet, an das System, und das System bestätigt jede solche Zulassung ebenfalls über das Kommunikationsnetz und diese App. Abrechnung angefallener Gebühren erledigt das System unter Nutzung der bei der Anmeldung mitgeteilten Zahlungsinformation, beispielsweise durch Belastung einer Kreditkarte oder durch Abbuchung von einem Girokonto der Benutzerperson.

Das Dokument US 2022/0148340 A1 betrifft ein System und ein Verfahren zur Erleichterung des Parkens eines Kraftfahrzeuges in einer Parkzone bereitgestellt. Das System umfasst passive NFC-Tags, die an Parkzonen angebracht sind und mittels eines zur Nutzung der NFC-Technologie eingerichteten Benutzerterminals ausgelesen werden können, wobei sie beim Auslesen eine zum Beispiel im Internet erreichbare und für das NFC-Tag spezifische Adresse übermitteln. Über diese Adresse wird ein Parksystem erreicht, bei dem eine Erlaubnis zum Parken eines Fahrzeuges in der Parkzone erhalten und bezahlt werden kann. Das Parksystem kann sich eines dem Benutzerterminal bei der Anmeldung zum Parken zu übermittelnden Cookies bedienen, und dieses Cookie bei einer folgenden Anmeldung zum Beenden des Parkens von dem Benutzerterminal abfragen, um den für das Parken zu zahlenden Betrag zu ermitteln und dem Fahrzeug ein Verlassen der Parkzone zu ermöglichen, beispielsweise durch Öffnen einer Schranke. Das Parksystem leistet oder ermöglicht abgesehen von der Erteilung und Abrechnung einer Erlaubnis zum Parken keinerlei Dienst für einen Benutzer, insbesondere keinen von dem Benutzer zu vergütenden Dienst.

Das Dokument US 2023/0100672 A1 betrifft ein System aus einem Benutzerterminal, einem Server, einer Datenbank und einer Vielzahl von Geräten, welche drahtlos mit dem Server verbunden sind und durch diesen mittels Benutzerinformation, die in der Datenbank vorliegt, gesteuert werden können. Solches Steuern geschieht auf Veranlassung eines Benutzers, welcher dem Server Daten übermittelt, aus denen der Server entsprechende Benutzerinformation aus der Datenbank entnimmt und damit das entsprechende Gerät steuert.

Die bekannten Systeme und die bekannten Verfahren ermöglichen eine gemeinschaftliche Inanspruchnahme eines Dienstes, wie er in einer Freigabe der Nutzung eines Haushaltsgeräts, insbesondere einer Waschmaschine oder eines Wäschetrockners, durch entsprechend angemeldete Benutzerpersonen jeweils nacheinander besteht.

Als Alternative zur Verwendung des Internets zur Inanspruchnahme eines solchen Dienstes sind Kommunikationssysteme wie Near Field Communication (NFC) erwogen worden. Die Nutzung solcher Alternativen erfordert unter Umständen sowohl im Hinblick auf notwendige Systemkomponenten ans auch im Hinblick auf Kosten für Anschaffung, Installation und Wartung hohen Aufwand, insbesondere durch erhöhte Komplexität und die damit verbundene erhöhte Fehleranfälligkeit. Deshalb stehen diese Alternativen einem Wunsch nach Einfachheit und Robustheit des gesamten Systems entgegen.

Selbst abgesehen von interner Komplexität eines solchen Systems und dem dadurch verursachten Aufwand für Betrieb, Nutzung, Wartung und Fehlerkorrektur kann je nach dem Ort, an dem ein solcher Dienst zur Verfügung gestellt werden soll, und dem Kreis von Benutzerpersonen, zu deren Verfügung der Dienst verfügbar sein soll, die Notwendigkeit der Anmeldung und Abgabe von Zahlungsinformation im Vorfeld einer Inanspruchnahme des Dienstes als unangemessen empfunden werden. Als minimal akzeptabler Satz von Information, der zur Nutzung des Dienstes als angemessen gelten könnte, kann die Erklärung der Annahme der für den Dienst gestellten Nutzungsbedingungen und die Angabe von Zahlungsinformation zur Begleichung einer Forderung von Gebühren für den Dienst angesehen werden, gegebenenfalls ergänzt durch die Maßgabe, dass die Zahlungsinformation nur zum Zweck der Gebührenzahlung benutzt werden darf und danach zu löschen ist, oder dass die Zahlungsinformation nur von einem vom Anbieter des Dienstes beauftragten und zur Vertraulichkeit verpflichteten Zahlungsdienstleister, nicht aber vom Anbieter des Dienstes selbst, zur Kenntnis genommen werden darf.

Es besteht somit ein Bedürfnis nach einem System und einem Verfahren der der jeweils eingangs definierten Gattung, die möglichst einfach strukturiert und aufgebaut sind und die einer Benutzerperson eine möglichst einfache, eventuell sogar selbsterklärende, Bedienung zur Inanspruchnahme des angebotenen Dienstes mit üblicherweise verfügbaren Mitteln, insbesondere einem lediglich zur Nutzung des Internets ausgestatteten mobilen Terminal wie einem Smartphone, gestatten. Auch besteht ein Bedürfnis nach einem entsprechenden Computerprogrammprodukt und einem entsprechenden computerlesbaren Datenträger.

Die Erfindung geht deshalb von der Aufgabe aus, ein System und ein Verfahren der jeweils eingangs definierten Gattung sowie ein entsprechendes Computerprogrammprodukt und einen entsprechenden computerlesbaren Datenträger bereitzustellen, um einer Benutzerperson eine möglichst einfache Bedienung des Systems mit üblicherweise verfügbaren Mitteln zu gestatten.

Zur Lösung dieser Aufgabe werden gemäß der Erfindung ein System, ein Verfahren, ein Computerprogrammprodukt und eine Kombination umfassend zumindest einen computerlesbaren Datenträger gemäß entsprechendem unabhängigem Patentanspruch angegeben.

Bevorzugte Ausgestaltungen der Erfindung sind in den abhängigen Patentansprüchen sowie in nachfolgender Beschreibung aufgeführt und können auch in Kombinationen untereinander angewendet werden, soweit technische Erwägungen dies gestatten, auch soweit dies hierin nicht explizit ausgeführt ist. Bevorzugten Ausgestaltungen des erfindungsgemäßen Systems entsprechen bevorzugte Ausgestaltungen des erfindungsgemäßen Verfahrens, des erfindungsgemäßen Computerprogrammprodukts und der erfindungsgemäßen Kombination umfassend zumindest einen computerlesbaren Datenträger und umgekehrt, und dies auch dann, wenn es hierin nicht explizit ausgeführt ist.

Zur Lösung der Aufgabe wird gemäß der Erfindung dementsprechend angegeben ein System zum Zulassen zumindest eines an einem vorgegebenen Ort zu erbringenden Dienstes, umfassend ein zur Kommunikation mittels Internet-Protokollen eingerichtetes Kommunikationsnetz, ein mobiles Terminal, einen Server und eine am vorgegebenen Ort angeordnete Kontrolleinrichtung, welche zur Kommunikation über das Kommunikationsnetz mittels Internet-Protokollen eingerichtet sind, wobei die Kontrolleinrichtung mit dem Server verbunden und von dem Server zum Zulassen des Dienstes steuerbar ist, wobei der Server mit dem mobilen Terminal über das Kommunikationsnetz verbindbar ist, bei welchem System der Server eingerichtet ist, um eine Validierung jeder von dem mobilen Terminal erhaltenen Anforderung des Dienstes durchzuführen und bei positivem Ergebnis der Validierung den Dienst zuzulassen. Bei diesem System ist der Server eingerichtet, um die Anforderung als Adresse für eine von dem Server verwaltete erste Internet-Seite zu empfangen und die erste Internet-Seite dem mobilen Terminal zugänglich zu machen, ein erstes Cookie mit ersten Daten umfassend erste Identifizierungsdaten sowie einer Geltung für einen ersten vorbestimmten Zeitraum zu erzeugen und an das mobile Terminal zu senden und zugleich von dem mobilen Terminal Information einschließlich Zahlungsinformation für die Validierung der Anforderung abzurufen, ist das mobile Terminal eingerichtet, um die erste Internet-Seite darzustellen, die abgerufene Information in die erste Internet-Seite einzutragen und mit den Daten des ersten Cookies an den Server zu senden, ist der Server eingerichtet, um die von dem mobilen Terminal abgerufene Information zu validieren und entweder, falls die Validierung ein negatives Ergebnis hat, den Dienst mittels Steuern der Kontrolleinrichtung nicht zuzulassen und eine entsprechende zweite Internet-Seite zur Darstellung auf dem mobilen Terminal mit einer negativen Antwort und mit dem ersten Cookie an das mobile Terminal zu senden, oder falls die Validierung ein positives Ergebnis hat, den Dienst mittels Steuern der Kontrolleinrichtung zuzulassen und eine entsprechende dritte Internet-Seite zur Darstellung auf dem mobilen Terminal mit einer positiven Antwort und mit dem ersten Cookie an das mobile Terminal zu senden.

Zur Lösung der Aufgabe wird gemäß der Erfindung ebenfalls angegeben ein Verfahren zum Zulassen zumindest eines an einem vorgegebenen Ort zu erbringenden Dienstes über ein zur Kommunikation mittels Internet-Protokollen eingerichtetes Kommunikationsnetz mittels eines mobilen Terminals, eines Servers und einer am vorgegebenen Ort angeordneten Kontrolleinrichtung, wobei die Kontrolleinrichtung mit dem Server verbunden und von dem Server zum Zulassen des Dienstes steuerbar ist, wobei der Server mit dem mobilen Terminal über das Kommunikationsnetz verbunden ist, bei welchem Verfahren der Server eine Validierung jeder von dem mobilen Terminal erhaltenen Anforderung des Dienstes durchführt und bei positivem Ergebnis der Validierung den Dienst zulässt. Bei diesem Verfahren empfängt der Server die Anforderung als Adresse für eine von dem Server verwaltete erste Internet-Seite empfängt und macht die erste Internet-Seite dem mobilen Terminal zugänglich macht, erzeugt ein erstes Cookie mit ersten Daten umfassend erste Identifizierungsdaten sowie einer Geltung für einen ersten vorbestimmten Zeitraum, sendet dieses an das mobile Terminal und ruft zugleich von dem mobilen Terminal Information einschließlich Zahlungsinformation für die Validierung der Anforderung ab, das mobile Terminal stellt die erste Internet-Seite dar, trägt die abgerufene Information in die erste Internet-Seite ein und sendet diese mit den Daten des ersten Cookies an den Server, der Server validiert die von dem mobilen Terminal abgerufene Information und entweder, falls die Validierung ein negatives Ergebnis hat, lässt der Server den Dienst nicht zu und sendet eine entsprechende zweite Internet-Seite zur Darstellung auf dem mobilen Terminal mit einer negativen Antwort und mit dem ersten Cookie an das mobile Terminal , oder, falls die Validierung ein positives Ergebnis hat, lässt der Server den Dienst zu und sendet eine entsprechende dritte Internet-Seite zur Darstellung auf dem mobilen Terminal mit einer positiven Antwort und mit dem ersten Cookie an das mobile Terminal.

Zur Lösung der Aufgabe wird gemäß der Erfindung weiterhin angegeben ein Computerprogrammprodukt umfassend ein Zentralmodul von ersten Befehlen und ein Benutzermodul von zweiten Befehlen, wobei ein erster Computer bei Ausführung der ersten Befehle und zumindest ein zweiter Computer bei Ausführung der zweiten Befehle ein Verfahren gemäß der Erfindung ausführen, bei welchem Verfahren der erste Computer das Zentralterminal und jeder des zumindest einen zweiten Computers das Benutzerterminal darstellen.

Zur Lösung der Aufgabe wird gemäß der Erfindung fernerhin angegeben eine Kombination umfassend zumindest einen computerlesbaren Datenträger, auf welcher Kombination das erfindungsgemäße Computerprogrammprodukt gespeichert ist.

Erfindungsgemäß ist demnach vorgesehen, dass eine der Inanspruchnahme des Dienstes vorgeschaltete Anmeldung der Benutzerperson mit Installation eines entsprechenden Programms auf ein mobiles Terminal und Mitteilung unbedingt notwendiger Information einschließlich Zahlungsinformation sowie Bezeichnung der zur Nutzung gewünschten Wäschepflegemaschine für deren gebührenpflichtige Nutzung über diese Programm im Vorfeld der Inanspruchnahme des Dienstes ersetzt wird durch ein Verfahren, bei dem der Server auf die Anmeldung, die lediglich die Anwahl einer entsprechenden Internet-Adresse unter Erfüllung geringer, unbedingt notwendiger Anforderungen wie Akzeptanz von Nutzungsbedingungen und Zahlungsinformation erfordert, wobei eine - zuvor durch das besonders installierte Programm definierte - Verbindung zwischen der Nutzerperson bzw. deren mobilem Terminal und dem Server nur durch entsprechende Definition des Servers, insbesondere durch ein auf Veranlassung des Servers auf dem mobilen Terminal gespeicherten ersten Cookies erfolgt und so lange dauert, wie das erste Cookie Geltung hat. Damit kann die Inanspruchnahme des Dienstes ad hoc und je nach Bedürfnis erfolgen, wobei sowohl auf Seite der Benutzerperson als auch auf Seite des Servers lediglich geläufig verfügbare Mittel eingesetzt werden. Bei Nutzung des ersten Cookies als Speicher für die Zahlungsinformation kann während der Geltung des ersten Cookies nach einer ersten Inanspruchnahme des Diensts auch eine weitere Inanspruchnahme des Dienstes erfolgen, ohne dass die unbedingt notwendige Information erneut eingegeben werden muss.

Das Kommunikationsnetz kann das Internet sein, wobei der Einsatz eines lokalen Netzwerkes, welches Kontakt zum Internet vermittelt, insbesondere eines WLAN, auf Seiten der Benutzerperson und auf Seiten des Servers und der Kontrolleinrichtung nicht ausgeschlossen ist. Die zur Kommunikation verwendeten Protokolle können bedarfsweise Verschlüsselung beinhalten, um allfälligen Erfordernissen hinsichtlich Sicherheit und Vertraulichkeit Rechnung zu tragen.

Die Darstellung einer Internet-Seite auf dem mobilen Terminal erfolgt insbesondere mit einem geläufig zur Nutzung des Internets verfügbaren Browser, womit eine solche Möglichkeit die einzige Voraussetzung ist, um ein mobiles Terminal zur Inanspruchnahme des Dienstes nutzen zu können.

Die erste Internet-Seite muss nicht notwendig eine einzige solche Seite sein, sondern kann eine Abfolge mehrerer solcher Seiten sein, die nacheinander die benötigte Information anfordern und der Benutzerperson gegebenenfalls auch notwendige oder hilfreiche Hinweise zur Inanspruchnahme des Dienstes geben, oder der Benutzerperson eine möglichst angenehme und leicht verständliche Darstellung des zu vermittelnden Inhalts bieten. Dies alles gilt auch für weitere Internet-Seiten, die im Zusammenhang mit der Erfindung erwähnt sind.

In einer bevorzugten Weiterbildung der Erfindung ist vorgesehen, dass die Adresse an dem vorgegebenen Ort derart angebracht ist, dass sie in das mobile Terminal übernommen werden kann, wobei mit weiterem Vorzug die Adresse als durch das mobile Terminal lesbarer Code, insbesondere als QR-Code, angebracht ist. Derart kann das mobile Terminal die Adresse direkt zum Senden der Anforderung an den Server übernehmen, beispielsweise durch Lesen und Decodieren des QR-Codes, womit der Benutzerperson eine direkte Eingabe der Adresse in Textform erspart bleibt. Dies bietet eine weitere wesentliche Vereinfachung der Prozedur, und grenzt die von der Benutzerperson beizutragende Information auf das unbedingt Notwendige ein.

In einer anderen bevorzugten Weiterbildung der Erfindung ist vorgesehen, dass die Validierung eine Feststellung beinhaltet, ob der Dienst zur Zeit der Anforderung zur Verfügung steht, wobei eine positiven Feststellung eine Voraussetzung für ein zur Zeit der Anforderung positives Ergebnis der Validierung ist, und wobei der Server eingerichtet ist, um bei einer negativen Feststellung eine vierte Internet-Seite zur Darstellung auf dem mobilen Terminal mit dem ersten Cookie an das mobile Terminal zu senden, die eine negative Antwort für die Anforderung und eine Abfrage enthält, ob das mobile Terminal die Sendung einer Push-Nachricht von dem Server an das mobile Terminal zulässt, wobei im Fall des Zulassens der Push-Nachricht der Server zu einer späteren Zeit nach der Zeit der Anforderung erneut feststellt, ob der Dienst zu dieser späteren Zeit zur Verfügung steht, und bei positiver erneuter Feststellung eine entsprechende Push-Nachricht an das mobile Terminal sendet, um das mobile Terminal aufzufordern, eine neue Anforderung mit dem ersten Cookie an den Server zu senden. Diese Weiterbildung nutzen ein anderes geläufig zur Verfügung stehendes Mittel, nämlich das Verfahren des Sendens und Empfangens von Push-Nachrichten durch den Server oder das mobile Terminal, um den Dienst auch dann nutzen zu können, wenn er zur Zeit der Anforderung nicht verfügbar ist, was dann der Fall sein kann, wenn eine andere Benutzerperson den Dienst gerade nutzt oder wenn die Mittel, die im Rahmen des Dienstes zur Verfügung gestellt werden, gerade schadhaft sind, gewartet oder repariert werden. Jedenfalls wird somit die die Anforderung stellende Benutzerperson für die Inanspruchnahme des Dienstes zu einem späteren Zeitpunkt vorgemerkt und zu gegebener Zeit benachrichtigt, ohne dass die bei der Anforderung mitgeteilte Identitäts- und Zahlungsinformation verlorengeht.

In einer weiteren bevorzugten Weiterbildung der Erfindung ist vorgesehen, dass der Server eingerichtet ist, um zusammen mit dem ersten Cookie ein zweites Cookie mit zweiten Daten umfassend zweite Identifizierungsdaten sowie einer Geltung für einen zweiten vorbestimmten Zeitraum zu erzeugen, welcher kleiner als der erste vorbestimmte Zeitraum ist, wobei das mobile Terminal und der Server eingerichtet sind, um bei jedem Senden des ersten Cookies das zweite Cookie auf Geltung zu prüfen und im Fall, in dem die Geltung des zweiten Cookies gegeben ist, das zweite Cookie mit dem ersten Cookie zu senden, und bei dem der Server eingerichtet ist, im Fall, dass die Geltung des zweiten Cookies nicht gegeben ist, ein neues zweites Cookie zu erzeugen und zusammen mit dem ersten Cookie zu senden. Hierbei dient das erste Cookie in erster Linie dazu, die Verbindung - auch als "Session" bezeichnet - zwischen dem mobilen Terminal und dem Server über einen längeren Zeitraum zu definieren und zu erhalten, und das zweite Cookie wird genutzt, um die Verbindung kurzfristig zu definieren. Mit weiterem Vorzug beträgt dabei der erste Zeitraum zwischen 20 Tagen und 40 Tagen, insbesondere 30 Tage, und beträgt der zweite Geltungszeitraum zwischen zwei Minuten und 10 Minuten, insbesondere fünf Minuten.

In einer ferneren Weiterbildung der Erfindung ist vorgesehen, dass an dem vorgegebenen Ort ein Haushaltsgerät aufgestellt ist, welches durch die Kontrolleinrichtung einschaltbar ist, um einen Betrieb des Haushaltsgeräts zu ermöglichen, und durch die Kontrolleinrichtung ausschaltbar ist, um einen Betrieb des Haushaltsgeräts zu verhindern, und bei dem der Dienst ein Ermöglichen des Betriebs des Haushaltsgeräts durch Einschalten des Haushaltsgeräts ist. Mit weiterem Vorzug ist das Haushaltsgerät eine Wäschepflegemaschine, insbesondere eine Waschmaschine oder ein Wäschetrockne, und steht damit zu einer gemeinschaftlichen Nutzung durch entsprechend angemeldete Benutzerpersonen, die nacheinander den Dienst in Anspruch nehmen, durch entsprechende Freigabe der Nutzung des Haushaltsgeräts zur Verfügung.

Ausführungsbeispiele der Erfindung sind nachfolgend anhand der beigefügten Zeichnung näher erläutert. Es zeigen:
- Fig. 1: eine schematische Ansicht eines ersten Systems zum Zulassen zumindest eines an einem vorgegebenen Ort zu erbringenden Dienstes;
- Fig. 2: eine schematische Ansicht eines zweiten Systems zum Zulassen zumindest eines an einem vorgegebenen Ort zu erbringenden Dienstes;
- Fig. 3: ein erstes Schema der Kommunikation im ersten System gemäß Fig. 1 oder im zweiten System gemäß Fig. 2;
- Fig. 4: ein zweites Schema der Kommunikation im ersten System gemäß Fig. 1 oder im zweiten System gemäß Fig. 2;
- Fig. 5: eine schematisierte Darstellung eines ersten Cookies;
- Fig. 6: ein viertes Schema der Kommunikation im ersten System gemäß Fig. 1 oder im zweiten System gemäß Fig. 2;
- Fig. 7: eine schematisierte Darstellung einer Kombination von Datenträgern, welche ein Computerprogrammprodukt enthält.

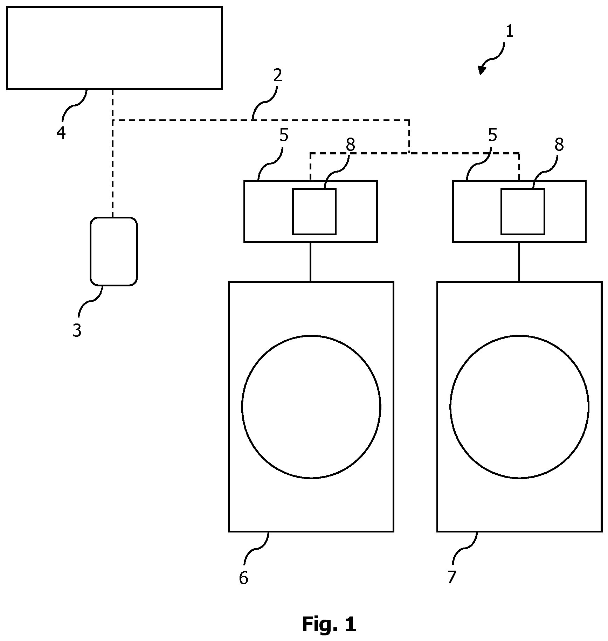

Figur 1 zeigt eine schematische Ansicht eines ersten Systems zum Zulassen zumindest eines an einem vorgegebenen Ort 1 zu erbringenden Dienstes, umfassend ein zur Kommunikation mittels Internet-Protokollen eingerichtetes Kommunikationsnetz 2, ein - von einer Benutzerperson zu bedienendes - mobiles Terminal 3, einen Server 4 und eine am vorgegebenen Ort 1 angeordnete Kontrolleinrichtung 5. Die Bestandteile 3, 4 und 5 sind zur Kommunikation über das Kommunikationsnetz 2 mittels Internet-Protokollen eingerichtet, wobei die Kontrolleinrichtung 5 mit dem Server 4 verbunden und von dem Server 4 zum Zulassen des Dienstes steuerbar ist. Auch ist der Server 4 mit dem mobilen Terminal 3 über das Kommunikationsnetz 2 verbindbar. Der Server 4 ist eingerichtet, um eine Validierung jeder von dem mobilen Terminal 3 erhaltenen Anforderung des Dienstes durchzuführen und bei positivem Ergebnis der Validierung den Dienst zuzulassen. Die hierzu erforderliche Prozedur wird nachfolgend erläutert.

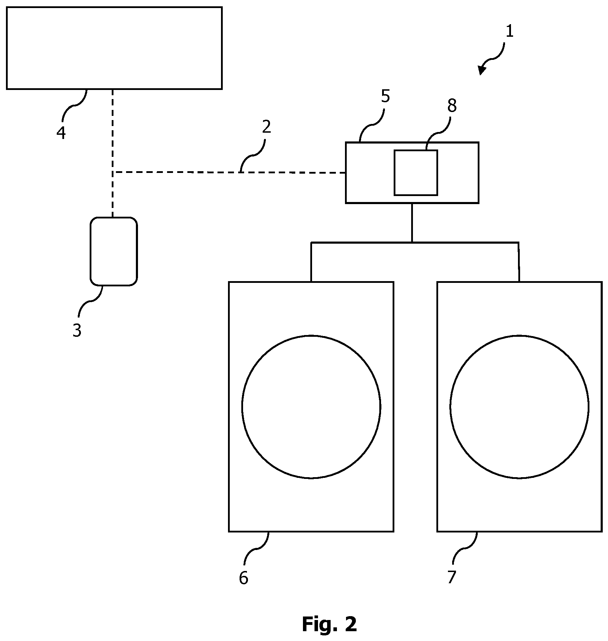

Figur 2 zeigt eine schematische Ansicht eines zweiten Systems zum Zulassen zumindest eines an einem vorgegebenen Ort 1 zu erbringenden Dienstes, welches weitgehend gleich dem ersten System funktioniert, wobei die Differenz zum ersten System nachfolgend erläutert wird.

An dem vorgegebenen Ort 1 sind gemäß Figur 1 und gemäß Figur 2 jeweils zwei Haushaltsgeräte 6, 7 aufgestellt, welche jeweils durch die Kontrolleinrichtung 5 einschaltbar sind, um einen Betrieb des jeweiligen Haushaltsgeräts 6, 7 zu ermöglichen, und jeweils durch die Kontrolleinrichtung 5 ausschaltbar sind, um einen Betrieb des jeweiligen Haushaltsgeräts 6, 7 zu verhindern, und bei dem der Dienst ein Ermöglichen des Betriebs zumindest eines der Haushaltsgeräte 6, 7 durch Einschalten dieses Haushaltsgeräts 6, 7 ist. Beide Haushaltsgeräte 6, 7 sind vorliegend Wäschepflegemaschinen 6, 7, und zwar ist eines der Haushaltsgeräte 6, 7 eine Waschmaschine 6, und das andere ist ein Wäschetrockner 7. Die Kontrolleinrichtung 5 kann separat von den Haushaltsgeräten 6, 7 angeordnet sein. Im ersten System gemäß Figur 1 ist für jedes Haushaltsgerät 6, 7 eine separate Kontrolleinrichtung 5 vorgesehen. Im zweiten System gemäß Figur 2 ist zur Kontrolle beider Haushaltsgeräte 6, 7 eine einzige und mit beiden Haushaltsgeräten 6, 7 verbundene Kotrolleinrichtung 5 vorgesehen. Die Kontrolleinrichtung 5 kann auch ein Teil der internen Steuerung eines Haushaltsgeräts 6, 7 sein, wobei die Kontrolleinrichtung 5 zur Steuerung nur dieses einen Haushaltsgeräts 6, 7 oder zur Steuerung mehrerer Haushaltsgeräte 6, 7 bestimmt sein kann. Es genügt, wenn die Kontrolleinrichtung 5 derart eingerichtet ist, dass sie - mit welchen Mitteln auch immer - den Betrieb eines zugeordneten Haushaltsgeräts 6, 7 zulassen oder verhindern kann. Dies kann geschehen durch entsprechenden Zugriff auf einen Schalter in der elektrischen Energieversorgung des Haushaltsgeräts 6, 7.

Das Kommunikationsnetz 2 kann das Internet sein, wobei der Einsatz eines lokalen Netzwerkes, welches Kontakt zum Internet vermittelt, insbesondere eines WLAN, auf Seiten der Benutzerperson bez. des mobilen Terminals 3 und auf Seiten des Servers 4 und der Kontrolleinrichtung 5 nicht ausgeschlossen ist. Die zur Kommunikation verwendeten Protokolle können bedarfsweise Verschlüsselung beinhalten, um allfälligen Erfordernissen hinsichtlich Sicherheit und Vertraulichkeit Rechnung zu tragen. Das mobile Terminal 3 kann ein übliches Smartphone oder ein tragbarer Computer anderer Art sein. Erforderlich ist nur, dass ein Zugang zum Internet mit den geläufig verfügbaren Mitteln, insbesondere einem Internet-Browser, möglich ist.

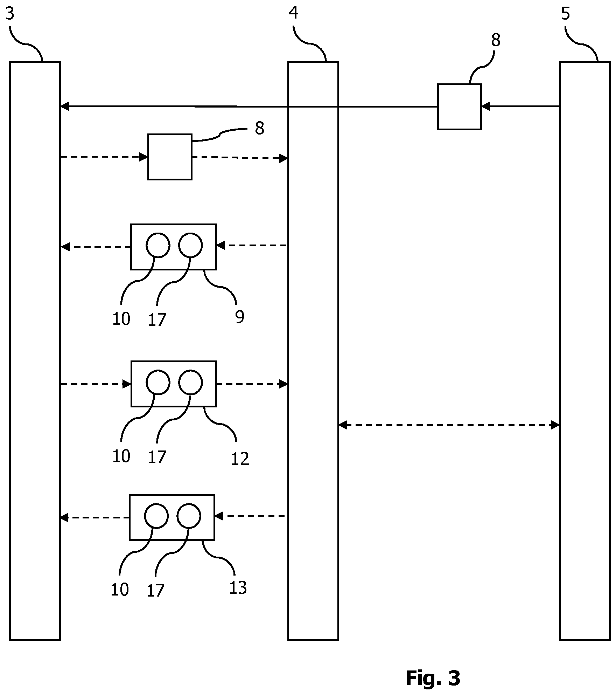

Figur 3 zeigt einen ersten Aspekt des Verfahrens zum Zulassen des Dienstes. Eine Adresse 8, über welche eine Anforderung einer Inanspruchnahme des Dienstes an den Server 4 gerichtet wird, ist an dem vorgegebenen Ort 1 derart angebracht, dass sie in das mobile Terminal 3 übernommen werden kann. Dies kann in der Weise geschehen, dass die Benutzerperson die in Textform vorliegende Adresse 8 liest und in das mobile Terminal 3 einschreibt, zum Beispiel in die Adresszeile eines darin geöffneten Internet-Browsers. Die Adresse 8 kann auch oder zusätzlich als durch das mobile Terminal 3 lesbarer Code, insbesondere als QR-Code, angebracht sein, so dass es nur erforderlich ist, den QR-Code mittels einer üblicherweise vorhandenen Kamera durch das mobile Terminal 3 zu scannen und die durch Auswertung des Codes ermittelte Internet-Adresse 8 anzuwählen. Dieser Vorgang ist in Figur 3 oben symbolisch dargestellt. Das nachfolgende Ansprechen des Servers 4 über das Kommunikationsnetz 2, in Figur 3 dargestellt durch gestrichelte Pfeile, ist der erste Schritt der Anforderung und ist in Figur 3 als zweite Zeile dargestellt.

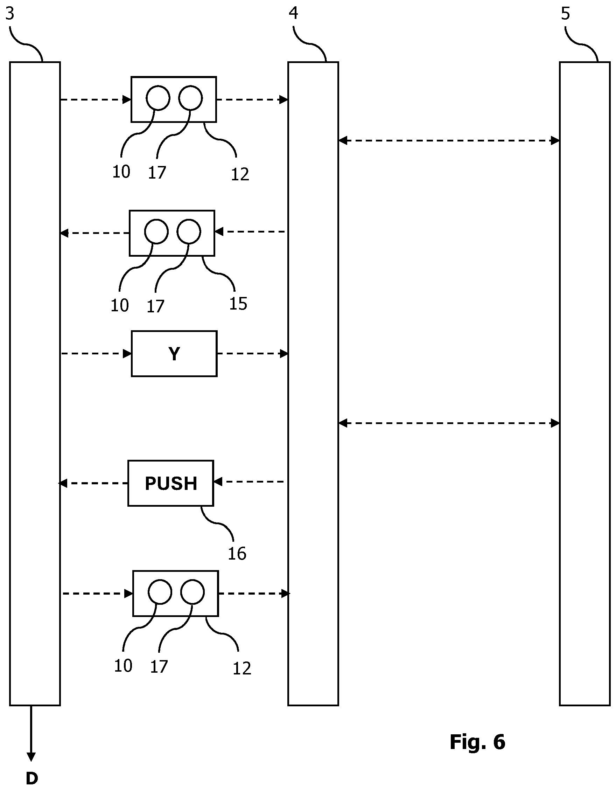

Der Server 4 antwortet auf die Anforderung unter der Adresse 8, indem er eine erste Internet-Seite 9, welcher die Adresse 8 zugeordnet ist, dem mobilen Terminal 3 zugänglich macht, wobei er ein erstes Cookie 10 mit ersten Daten umfassend erste Identifizierungsdaten 11 (siehe dazu Fig. 6) sowie einer Geltung für einen ersten vorbestimmten Zeitraum erzeugt und an das mobile Terminal 3 sendet und zugleich, also mit der Antwort oder in unmittelbarem zeitlichem Zusammenhang damit, von dem mobilen Terminal 3 Information 12 einschließlich Zahlungsinformation für die Validierung der Anforderung abruft.

Die erste Internet-Seite 9 muss nicht notwendig eine einzige solche Seite sein, sondern kann eine Abfolge mehrerer solcher Seiten sein, die nacheinander die benötigte Information 12 anfordern und der Benutzerperson gegebenenfalls auch notwendige oder hilfreiche Hinweise zur Inanspruchnahme des Dienstes geben oder der Benutzerperson eine möglichst angenehme und leicht verständliche Darstellung des zu vermittelnden Inhalts bieten. Dies alles gilt auch für weitere Internet-Seiten, die nachfolgend erwähnt sind.

Das mobile Terminal 3 stellt die erste Internet-Seite 9 zur Kenntnisnahme durch die Benutzerperson dar, trägt die abgerufene Information 12 in die erste Internet-Seite 9 ein, gegebenenfalls durch entsprechende Eingaben der Benutzerperson, und sendet diese mit den Daten des ersten Cookies 10 an den Server 4. Der Server 4 validiert die von dem mobilen Terminal 3 abgerufene Information 12, wobei diese Validierung sowohl die Verifizierung von Zahlungsinformation für die Einforderung einer Gebühr für die Inanspruchnahme des Dienstes als auch die Verfügbarkeit des Dienstes selbst - wofür eine Kommunikation mit der Kontrolleinrichtung 5 erfolgen kann, wie durch den gestrichelten Doppelpfeil in Fig. 3 dargestellt - und teilt dem mobilen Terminal 3 das Ergebnis der Validierung mit.

Gemäß Fig. 3 ist der Dienst nicht verfügbar und ist das Ergebnis der Validierung demnach negativ. Deshalb lässt der Server 4 den Dienst mittels Steuern der Kontrolleinrichtung 5 nicht zu und sendet eine entsprechende zweite Internet-Seite 13 zur Darstellung auf dem mobilen Terminal 3 mit einer negativen Antwort und mit dem ersten Cookie 10 an das mobile Terminal 3. Vor dem Senden einer solchen negativen Antwort kann gegebenenfalls eine Abfrage an das mobile Terminal 3 gerichtet werden, ob eine Inanspruchnahme des Dienstes zu einer späteren Zeit möglich wäre. Dies ist in Fig. 6 dargestellt.

Vorliegend wird zur Identifizierung von mobilem Terminal 3 und Server 4 in der Kommunikation über das Kommunikationsnetz 2 nicht nur das erste Cookie 10 benutzt. Zusätzlich zum ersten Cookie 10 erzeugt der Server 4 zusammen mit dem ersten Cookie 10 ein zweites Cookie 17 mit zweiten Daten umfassend zweite Identifizierungsdaten sowie einer Geltung für einen zweiten vorbestimmten Zeitraum zu erzeugen, welcher kleiner als der erste vorbestimmte Zeitraum ist, wobei das mobile Terminal 3 und der Server 4 bei jedem Senden des ersten Cookies 10 das zweite Cookie 17 auf Geltung prüfen und im Fall, in dem die Geltung des zweiten Cookies 17 gegeben ist, das zweite Cookie 17 mit dem ersten Cookie 10 senden, und bei dem der Server 4 im Fall, dass die Geltung des zweiten Cookies 17 nicht mehr gegeben ist, ein neues zweites Cookie 17 erzeugt und zusammen mit dem ersten Cookie 10 sendet. Der erste Zeitraum beträgt zwischen 20 Tagen und 40 Tagen, insbesondere 30 Tage, und der zweite Zeitraum beträgt zwischen zwei Minuten und 10 Minuten, insbesondere 5 Minuten.

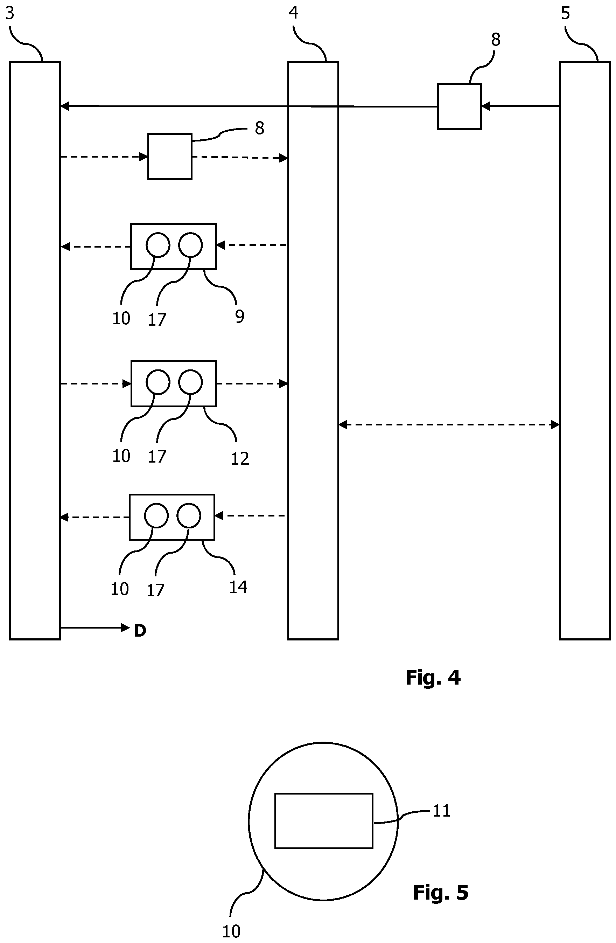

Fig. 4 zeigt den Ablauf für den Fall, dass die Validierung ein positives Ergebnis liefert, der Dienst also verfügbar ist. In diesem Fall wird der Dienst durch entsprechendes Steuern der Kontrolleinrichtung 5 zugelassen und eine entsprechende dritte Internet-Seite 14 zur Darstellung auf dem mobilen Terminal 3 mit einer positiven Antwort und mit dem ersten Cookie 10 an das mobile Terminal 3 gesendet. Die Benutzerperson kann somit den Dienst in Anspruch nehmen, wie mit dem Buchstaben "D" im unteren Teil der Fig. 4 gezeigt, und das gewünschte Haushaltsgerät 6, 7 benutzen.

Fig. 5 zeigt die wesentliche Struktur des ersten Cookies 10. Es handelt sich um ein zum Betreiben einer Internet-Verbindung zwischen zwei Partnern geläufiges Mittel und enthält erste Identitätsinformation, die von der zuerst angeforderten Internet-Seite - hier also dem Server 4 - vergeben wird und in der Regel aus einer zufällig gebildeten Zeichenkombination besteht. Sie dient der eindeutigen Identifizierung der Partner untereinander, ohne dass es notwendig wäre, dass sich ein Partner als Person mit Namen, Adresse und dergleichen identifiziert. Zusätzlich kann das erste Cookie 10 weitere Daten enthalten, beispielsweise können darin das für den angeforderten Dienst zu benutzende Haushaltsgerät 6, 7 und die dem Server 4 mitgeteilte Information 12 der Benutzerperson einschließlich Zahlungsinformation enthalten sein. Diese Aussagen gelten auch für weitere hier erwähnte Cookies.

Die Validierung beinhaltet auch eine Feststellung, ob der Dienst zur Zeit der Anforderung zur Verfügung steht, wobei eine positive Feststellung eine Voraussetzung für ein zur Zeit der Anforderung positives Ergebnis der Validierung ist.

Gemäß Fig. 6, die eine bevorzugte Variante darstellt, ist der Server 4 eingerichtet, um bei einer negativen Feststellung eine vierte Internet-Seite 15 zur Darstellung auf dem mobilen Terminal 3 mit dem ersten Cookie 10 an das mobile Terminal 3 zu senden, die eine negative Antwort für die Anforderung und eine Abfrage enthält, ob das mobile Terminal 3 die Sendung einer Push-Nachricht 16 von dem Server 4 an das mobile Terminal 3 zulässt. Im Fall des Zulassens der Push-Nachricht 16 (Nachricht "Y") stellt der Server 4 zu einer späteren Zeit nach der Zeit der Anforderung erneut fest, ob der Dienst zu dieser späteren Zeit zur Verfügung steht, und sendet bei positiver erneuter Feststellung eine entsprechende Push-Nachricht 16 an das mobile Terminal 3, um das mobile Terminal 3 aufzufordern, eine neue Anforderung mit dem ersten Cookie 10 an den Server 4 zu senden. Im Fall, dass die Push-Nachricht 16 nicht zugelassen wird, bleibt es bei der Prozedur gemäß Fig. 3, mit der Sendung der zweiten Internet-Seite 13 zur Darstellung auf dem mobilen Terminal 3 mit einer negativen Antwort.

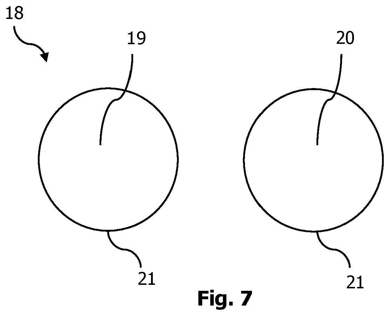

Fig. 7 zeigt ein Computerprogrammprodukt 18 umfassend ein Servermodul 19 von ersten Befehlen und ein Kontrollmodul 20 von zweiten Befehlen, wobei ein Server 4 bei Ausführung der ersten Befehle und eine Kontrolleinrichtung 5 bei Ausführung der zweiten Befehle und Kommunikation untereinander und mit einem mobilen Terminal 3 über ein zur Kommunikation mittels Internet-Protokollen eingerichtetes Kommunikationsnetz 2 ein Verfahren wie vorstehend beschrieben ausführen. Dieses Computerprogrammprodukt 18 ist gespeichert in einer Kombination umfassend zwei computerlesbare Datenträger 21.

Die hier beschriebenen Systeme und das hier beschriebene Verfahren erreichen, dass der Server 4 auf die Anmeldung, die lediglich die Anwahl einer entsprechenden Internet-Adresse 8 unter Erfüllung geringer, unbedingt notwendiger Anforderungen wie Akzeptanz von Nutzungsbedingungen und Zahlungsinformation erfordert, eine Verbindung zwischen der Nutzerperson bzw. deren mobilem Terminal 3 und dem Server 4 nur durch entsprechende Definition des Servers 4, insbesondere durch ein auf Veranlassung des Servers 4 auf dem mobilen Terminal 3 gespeicherten ersten Cookie 10, erfolgt und so lange dauert, wie das erste Cookie 10 Geltung hat. Damit kann die Inanspruchnahme des Dienstes ad hoc und je nach Bedürfnis erfolgen, wobei sowohl auf Seite der Benutzerperson als auch auf Seite des Servers 4 lediglich geläufig verfügbare Mittel eingesetzt und dabei nur unbedingt erforderliche Information für den Ablauf und die Bezahlung des Dienstes abgefragt werden. Insbesondere ist es nicht notwendig, dass sich die Benutzerperson dem Server 4 mit eigenem Namen und eigener Adresse zu erkennen gibt.

### Bezugszeichenliste

- 1.: Ort des Dienstes
- 2.: Kommunikationsnetz
- 3.: Mobiles Terminal
- 4.: Server
- 5.: Kontrolleinrichtung
- 6.: Haushaltsgerät, Waschmaschine
- 7.: Haushaltsgerät, Wäschetrockner
- 8.: Adresse für erste Internet-Seite
- 9.: Erste Internet-Seite
- 10.: Erstes Cookie
- 11.: Erste Identifizierungsdaten
- 12.: Information zur Validierung
- 13.: Zweite Internet-Seite
- 14.: Dritte Internet-Seite
- 15.: Vierte Internet-Seite
- 16.: Push-Nachricht
- 17.: Zweites Cookie
- 18.: Computerprogrammprodukt
- 19.: Servermodul
- 20.: Kontrollmodul
- 21.: Datenträger

## Patentansprüche

1. System zum Zulassen zumindest eines an einem vorgegebenen Ort (1) zu erbringenden Dienstes, umfassend ein zur Kommunikation mittels Internet-Protokollen eingerichtetes Kommunikationsnetz (2), ein mobiles Terminal (3), einen Server (4) und eine am vorgegebenen Ort (1) angeordnete Kontrolleinrichtung (5), welche zur Kommunikation über das Kommunikationsnetz (2) mittels Internet-Protokollen eingerichtet sind, wobei die Kontrolleinrichtung (5) mit dem Server (4) verbunden und von dem Server (4) zum Zulassen des Dienstes steuerbar ist, wobei der Server (4) mit dem mobilen Terminal (3) über das Kommunikationsnetz (2) verbindbar ist, bei welchem System der Server (4) eingerichtet ist, um eine Validierung jeder von dem mobilen Terminal (3) erhaltenen Anforderung des Dienstes durchzuführen und bei positivem Ergebnis der Validierung den Dienst zuzulassen, **dadurch gekennzeichnet, dass**
der Server (4) eingerichtet ist, um die Anforderung als Adresse (8) für eine von dem Server (4) verwaltete erste Internet-Seite (9) zu empfangen und die erste Internet-Seite (9) dem mobilen Terminal (3) zugänglich zu machen, ein erstes Cookie (10) mit ersten Daten umfassend erste Identifizierungsdaten (11) sowie einer Geltung für einen ersten vorbestimmten Zeitraum zu erzeugen und an das mobile Terminal (3) zu senden und zugleich von dem mobilen Terminal (3) Information (12) einschließlich Zahlungsinformation für die Validierung der Anforderung abzurufen,
das mobile Terminal (3) eingerichtet ist, um die erste Internet-Seite (9) darzustellen, die abgerufene Information (12) in die erste Internet-Seite (9) einzutragen und mit den Daten des ersten Cookies (10) an den Server (4) zu senden;
der Server (4) eingerichtet ist, um die von dem mobilen Terminal (3) abgerufene Information (12) zu validieren und entweder,
falls die Validierung ein negatives Ergebnis hat, den Dienst mittels Steuern der Kontrolleinrichtung (5) nicht zuzulassen und eine entsprechende zweite Internet-Seite (13) zur Darstellung auf dem mobilen Terminal (3) mit einer negativen Antwort und mit dem ersten Cookie (10) an das mobile Terminal (3) zu senden, oder
falls die Validierung ein positives Ergebnis hat, den Dienst mittels Steuern der Kontrolleinrichtung (5) zuzulassen und eine entsprechende dritte Internet-Seite (14) zur Darstellung auf dem mobilen Terminal (3) mit einer positiven Antwort und mit dem ersten Cookie (10) an das mobile Terminal (3) zu senden.

2. System nach Anspruch 1, bei dem die Adresse (8) an dem vorgegebenen Ort (1) derart angebracht ist, dass sie in das mobile Terminal (3) übernommen werden kann.

3. System nach Anspruch 3, bei dem die Adresse (8) als durch das mobile Terminal (3) lesbarer Code (8), insbesondere als QR-Code, angebracht ist.

4. System nach einem der vorigen Ansprüche, bei dem die Validierung eine Feststellung beinhaltet, ob der Dienst zur Zeit der Anforderung zur Verfügung steht, wobei eine positiven Feststellung eine Voraussetzung für ein zur Zeit der Anforderung positives Ergebnis der Validierung ist, und wobei der Server (4) eingerichtet ist, um bei einer negativen Feststellung eine vierte Internet-Seite (15) zur Darstellung auf dem mobilen Terminal (3) mit dem ersten Cookie (10) an das mobile Terminal (3) zu senden, die eine negative Antwort für die Anforderung und eine Abfrage enthält, ob das mobile Terminal (3) die Sendung einer Push-Nachricht (16) von dem Server (4) an das mobile Terminal (3) zulässt, wobei im Fall des Zulassens der Push-Nachricht (16) der Server (4) zu einer späteren Zeit nach der Zeit der Anforderung erneut feststellt, ob der Dienst zu dieser späteren Zeit zur Verfügung steht, und bei positiver erneuter Feststellung eine entsprechende Push-Nachricht (16) an das mobile Terminal (3) sendet, um das mobile Terminal (3) aufzufordern, eine neue Anforderung mit dem ersten Cookie (10) an den Server (4) zu senden.

5. System nach einem der vorigen Ansprüche, bei dem der Server (4) eingerichtet ist, um zusammen mit dem ersten Cookie (10) ein zweites Cookie (17) mit zweiten Daten umfassend zweite Identifizierungsdaten sowie einer Geltung für einen zweiten vorbestimmten Zeitraum zu erzeugen, welcher kleiner als der erste vorbestimmte Zeitraum ist, wobei das mobile Terminal (3) und der Server (4) eingerichtet sind, um bei jedem Senden des ersten Cookies (10) das zweite Cookie (17) auf Geltung zu prüfen und im Fall, in dem die Geltung des zweiten Cookies (17) gegeben ist, das zweite Cookie (17) mit dem ersten Cookie (10) zu senden, und bei dem der Server (4) eingerichtet ist, im Fall, dass die Geltung des zweiten Cookies (17) nicht gegeben ist, ein neues zweites Cookie (17) zu erzeugen und zusammen mit dem ersten Cookie (10) zu senden.

6. System nach Anspruch 5, bei dem der erste Zeitraum zwischen 20 Tagen und 40 Tagen beträgt, und bei dem der zweite Geltungszeitraum zwischen zwei Minuten und 10 Minuten beträgt.

7. System nach einem der vorigen Ansprüche, bei dem an dem vorgegebenen Ort (1) ein Haushaltsgerät (6, 7) aufgestellt ist, welches durch die Kontrolleinrichtung (5) einschaltbar ist, um einen Betrieb des Haushaltsgeräts (6, 7) zu ermöglichen, und durch die Kontrolleinrichtung (5) ausschaltbar ist, um einen Betrieb des Haushaltsgeräts (6, 7) zu verhindern, und bei dem der Dienst ein Ermöglichen des Betriebs des Haushaltsgeräts (6, 7) durch Einschalten des Haushaltsgeräts (6, 7) ist.

8. System nach Anspruch 7, bei dem das Haushaltsgerät (6, 7) eine Wäschepflegemaschine (6, 7), insbesondere eine Waschmaschine (6) oder ein Wäschetrockner (7), ist.

9. Verfahren zum Zulassen zumindest eines an einem vorgegebenen Ort (1) zu erbringenden Dienstes über ein zur Kommunikation mittels Internet-Protokollen eingerichtetes Kommunikationsnetz (2) mittels eines mobilen Terminals (3), eines Servers (4) und einer am vorgegebenen Ort (1) angeordneten Kontrolleinrichtung (5), wobei die Kontrolleinrichtung (5) mit dem Server (4) verbunden und von dem Server (4) zum Zulassen des Dienstes steuerbar ist, wobei der Server (4) mit dem mobilen Terminal (3) über das Kommunikationsnetz (2) verbunden ist, bei welchem Verfahren der Server (4) eine Validierung jeder von dem mobilen Terminal (3) erhaltenen Anforderung des Dienstes durchführt und bei positivem Ergebnis der Validierung den Dienst zulässt, **dadurch gekennzeichnet, dass**
der Server (4) die Anforderung als Adresse (8) für eine von dem Server (4) verwaltete erste Internet-Seite (9) empfängt und die erste Internet-Seite (9) dem mobilen Terminal (3) zugänglich macht, ein erstes Cookie (10) mit ersten Daten umfassend erste Identifizierungsdaten (11) sowie einer Geltung für einen ersten vorbestimmten Zeitraum erzeugt und an das mobile Terminal (3) sendet und zugleich von dem mobilen Terminal (3) Information (12) einschließlich Zahlungsinformation für die Validierung der Anforderung abruft,
das mobile Terminal (3) die erste Internet-Seite (9) darstellt, abgerufene Information (12) in die erste Internet-Seite (9) einträgt und diese mit den Daten des ersten Cookies (10) an den Server (4) sendet;
der Server (4) die von dem mobilen Terminal (3) abgerufene Information (12) validiert und entweder,
falls die Validierung ein negatives Ergebnis hat, den Dienst nicht zulässt und eine entsprechende zweite Internet-Seite (13) zur Darstellung auf dem mobilen Terminal (3) mit einer negativen Antwort und mit dem ersten Cookie (10) an das mobile Terminal (3) sendet, oder
falls die Validierung ein positives Ergebnis hat, den Dienst zulässt und eine entsprechende dritte Internet-Seite (14) zur Darstellung auf dem mobilen Terminal (3) mit einer positiven Antwort und mit dem ersten Cookie (10) an das mobile Terminal (3) sendet.

10. Verfahren nach Anspruch 9, bei dem die Adresse (8) an dem vorgegebenen Ort (1) derart angebracht ist, dass sie in das mobile Terminal (3) übernommen werden kann, und von dem mobilen Terminal (3) zum Senden der Anforderung übernommen wird.

11. Verfahren nach einem der Ansprüche 10 und 11, bei dem die Validierung eine Feststellung beinhaltet, ob der Dienst zur Zeit der Anforderung zur Verfügung steht, wobei eine positiven Feststellung eine Voraussetzung für ein zur Zeit der Anforderung positives Ergebnis der Validierung ist, und wobei der Server (4) bei einer negativen Feststellung eine vierte Internet-Seite (15) zur Darstellung auf dem mobilen Terminal (3) mit dem ersten Cookie (10) an das mobile Terminal (3) sendet, die eine negative Antwort für die der Anforderung und eine Abfrage enthält, ob das mobile Terminal (3) die Sendung einer Push-Nachricht (16) von dem Server (4) an das mobile Terminal (3) zulässt, wobei
im Fall des Zulassens der Push-Nachricht (16) der Server (4) zu einer späteren Zeit nach der Zeit der Anforderung erneut feststellt, ob der Dienst zu dieser späteren Zeit zur Verfügung steht, und bei positiver erneuter Feststellung eine entsprechende Push-Nachricht (16) an das mobile Terminal (3) sendet, um das mobile Terminal (3) aufzufordern, eine neue Anforderung mit dem ersten Cookie (10) an den Server (4) zu senden.

12. Verfahren nach einem der Ansprüche 9 bis 11, bei dem der Server (4) zusammen mit dem ersten Cookie (10) ein zweites Cookie (17) mit zweiten Daten umfassend zweite Identifizierungsdaten sowie einer Geltung für einen zweiten vorbestimmten Zeitraum erzeugt, welcher kleiner als der erste vorbestimmte Zeitraum ist, wobei das mobile Terminal (3) und der Server (4) bei jedem Senden des ersten Cookies (10) das zweite Cookie (17) auf Geltung prüfen und im Fall, in dem die Geltung des zweiten Cookies (17) gegeben ist, das zweite Cookie (17) mit dem ersten Cookie (10) senden, und bei dem der Server (4) im Fall, dass die Geltung des zweiten Cookies (17) nicht gegeben ist, ein neues zweites Cookie (17) erzeugt und zusammen mit dem ersten Cookie (10) sendet.

13. Verfahren nach Anspruch 12, bei dem der erste Zeitraum zwischen 20 Tagen und 40 Tagen beträgt, und bei dem der zweite Zeitraum zwischen zwei Minuten und 10 Minuten beträgt.

14. Verfahren nach einem der Ansprüche 9 bis 13, bei dem an dem vorgegebenen Ort (1) ein Haushaltsgerät (6, 7) aufgestellt ist, welches durch die Kontrolleinrichtung (5) einschaltbar ist, um einen Betrieb des Haushaltsgeräts (6, 7) zu ermöglichen, und durch die Kontrolleinrichtung (5) ausschaltbar ist, um einen Betrieb des Haushaltsgeräts (6, 7) zu verhindern, und bei dem der Dienst ein Ermöglichen des Betriebs des Haushaltsgeräts (6, 7) durch Einschalten des Haushaltsgeräts (6, 7) ist.

15. Computerprogrammprodukt (19) umfassend ein Servermodul (20) von ersten Befehlen und ein Kontrollmodul (21) von zweiten Befehlen, wobei ein Server (4) bei Ausführung der ersten Befehle und eine Kontrolleinrichtung (5) bei Ausführung der zweiten Befehle und Kommunikation untereinander und mit einem mobilen Terminal (3) über ein zur Kommunikation mittels Internet-Protokollen eingerichtetes Kommunikationsnetz (2) ein Verfahren gemäß einem der Ansprüche 9 bis 14 ausführen.

16. Kombination umfassend zumindest einen computerlesbaren Datenträger (22), auf welcher Kombination das Computerprogrammprodukt gemäß Anspruch 15 gespeichert ist.
